Europäisches Patentamt

European Patent Office

Office européen des brevets

(19)

(11) Numéro de publication: **0 096 626**

**A1**

(12)

# DEMANDE DE BREVET EUROPEEN

(21) Numéro de dépôt: **83401078.7**

(22) Date de dépôt: **27.05.83**

(51) Int. Cl.³: **H 01 M 10/14**
**H 01 M 10/28, H 01 M 10/04**

(30) Priorité: **28.05.82 FR 8209537**

(43) Date de publication de la demande:
**21.12.83 Bulletin 83/51**

(84) Etats contractants désignés:
**AT BE CH DE GB IT LI LU NL SE**

(71) Demandeur: **ACOME**
**14, rue de Marignan**
**F-75008 Paris(FR)**

(72) Inventeur: **Guignard, Claude**
**Le Vezely Sergy Gare**
**F-01630 St. Genis Pouilly(FR)**

(72) Inventeur: **Pournain, Gérard**
**La Petite Tournerie Saint Clément**
**F-50140 Mortain(FR)**

(72) Inventeur: **Louvet, Gérard**
**La Brocherie**
**F-50140 Mortain(FR)**

(72) Inventeur: **Picque, Marcel**
**Le Clos St Jean Romagny**
**F-50140 Mortain(FR)**

(74) Mandataire: **Gorree, Jean-Michel et al,**
**Cabinet Plasseraud 84, rue d'Amsterdam**
**F-75009 Paris(FR)**

(54) Dispositif pour former des paquets d'électrodes pour générateurs électrochimiques.

(57) Un ruban de non-tissé (non représenté) passe entre un poussoir (57) et un taquet (47), sur un volet (45) en position horizontale dessinée en traits mixtes, contre un support pivotant (39) et sur un transporteur à courroies (28) qui recoit au fur et à mesure les électrodes à emballer. Le volet (45) est entraîné par un bras (48) contre l'électrode qu'il recouvre du ruban non-tissé. Ensuite, un basculeur (38) disposé sous le transporteur à courroies (28) fait basculer le tout autour d'un axe (41) puis revient dans sa position initiale de sorte que le volet (45) se retrouve en position horizontale contre le taquet (47). Un élévateur (33) vient en position, illustré en traits mixtes, le poussoir (57) pousse l'électrode dessus, l'éléva-teur (33) la ramène sur le transporteur à courroies (28), une autre électrode est posée sur l'électrode envelopée et le même cycle recommence.

EP 0 096 626 A1

./...

FIG. 6

# DISPOSITIF POUR FORMER DES PAQUETS d'ELECTRODES POUR GENERATEURS ELECTROCHIMIQUES.

La présente invention se rapporte à un dispositif pour former des paquets d'électrodes pour générateurs électrochimiques par enroulement d'un ruban d'un matériau non-tissé autour des bords latéraux des électrodes en partant d'une électrode située au centre de ce paquet et en allant vers ses électrodes externes.

Un tel paquet d'électrodes ainsi qu'un dispositif destiné à le former sont décrits dans la demande de brevet européen 82810173.3. Dans ce dispositif, les pattes de connexion des électrodes sont positionnées verticalement dans un gabarit rotatif, ce gabarit tournant d'un demi-tour chaque fois qu'une électrode d'une autre polarité doit être ajoutée pour constituer le paquet. Il s'est avéré que les contraintes ainsi exercées sur les pattes de connexion, notamment lorsqu'elles sont en plomb, comme c'est le cas pour un grand nombre de générateurs électrochimiques, dépassent la résistance de ces pattes de connexion et les déforment.

Le but de la présente invention est de remédier aux inconvénients de ce dispositif, tout en conservant les avantages liés au mode de formation du paquet d'électrodes.

A cet effet, la présente invention a pour objet un dispositif pour former des paquets d'électrodes pour générateurs électrochimiques, par enroulement d'un ruban d'un matériau non-tissé autour des bords latéraux des électrodes en partant d'une électrode située au centre de ce paquet et en allant vers ses électrodes externes. Ce dispositif est caractérisé par le fait qu'il comporte un rouleau d'alimentation dudit ruban, un poste de chargement d'électrodes en position sensiblement horizontale disposé le long du chemin de déroulement de ce ruban, des moyens d'alimentation de ce poste en électrodes, un organe basculant monté autour d'un axe transversal audit chemin de déroulement, et situé en position initiale au poste de chargement sous le passage du ruban, un volet également articulé autour d'un axe transversal à ce chemin et adjacent à celui dudit organe basculant, ce volet s'étendant dans sa position initiale du poste de chargement en direction du rouleau d'alimentation du ruban sous le passage de ce ruban, des moyens d'entraînement pour faire basculer ledit volet vers ledit poste de chargement, ce volet entraînant une portion de ruban équivalent à sa longueur vers cet organe, des moyens d'entraînement pour faire basculer cet organe basculant et pour ramener le volet dans sa position initiale et un poussoir pour faire ensuite glisser le paquet en formation dudit volet en position initiale vers le poste de chargement.

L'avantage de ce dispositif réside dans le fait que les électrodes ne sont plus soumises à des contraintes susceptibles de les endommager, notamment pour dérouler le non-tissé du rouleau d'alimentation. Lors de leur basculement, les électrodes sont tenues par pincement. La tension sur le ruban peut être réglée de manière à former un paquet d'électrodes dans lequel le ruban non-tissé serre les électrodes avec la tension désirée. La formation du paquet d'électrodes en position horizontale permet d'intégrer le dispositif à une chaîne de fabrication, les paquets terminés pouvant être évacués par bande transporteuse sans aucune manipulation comme on l'expliquera par la suite. La fiabilité du dispositif et son automatisme intégral permettent de réaliser un gain appréciable de productivité. Enfin, on peut remarquer que ce résultat est obtenu grâce à un dispositif simple ne faisant pas intervenir une robotique complexe, mais n'utilisant que des vérins et des moteurs pas à pas de sorte que l'investissement nécessaire est relativement modeste, compte tenu du résultat obtenu. D'autres caractéristiques et avantages de l'invention apparaîtront dans la suite de la description.

Le dessin annexé illustre, schématiquement et à titre d'exemple, une forme d'exécution du dispositif objet de la présente invention.

La fig. 1 est une vue en perspective très schématique du dispositif.

La fig. 2 est une vue en élévation partielle prise transversalement au mécanisme d'emballage.

La fig. 3 est une vue en coupe selon III-III de la fig. 2.

La fig. 4 est une vue en coupe selon IV-IV de la fig. 3.

La fig. 5 est une vue en plan du mécanisme d'emballage.

La fig. 6 est une vue en élévation selon la ligne VI-VI de la fig. 5.

La fig. 7 est une vue selon la ligne VII-VII de la fig. 5.

La fig. 8 est une vue selon la ligne VIII-VIII de la fig. 5.

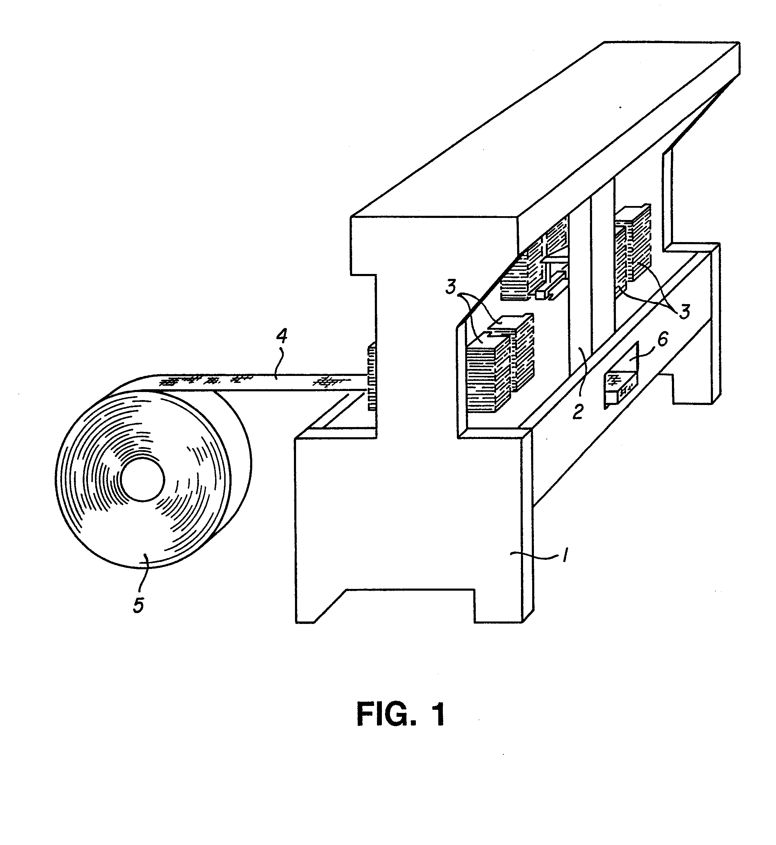

La fig. 1 illustre l'ensemble du dispositif de manière à permettre de pouvoir situer les différents mécanismes qui en font partie et que l'on décrira par la suite. Ce dispositif comporte un bâti 1 sur lequel est monté un chariot d'alimentation 2 des électrodes 3, déplaçable transversalement à un mécanisme d'emballage situé sur la trajectoire décrite par un ruban d'un matériau non-tissé 4 entre un rouleau d'alimentation 5 et une sortie 6 des paquets d'électrodes emballées.

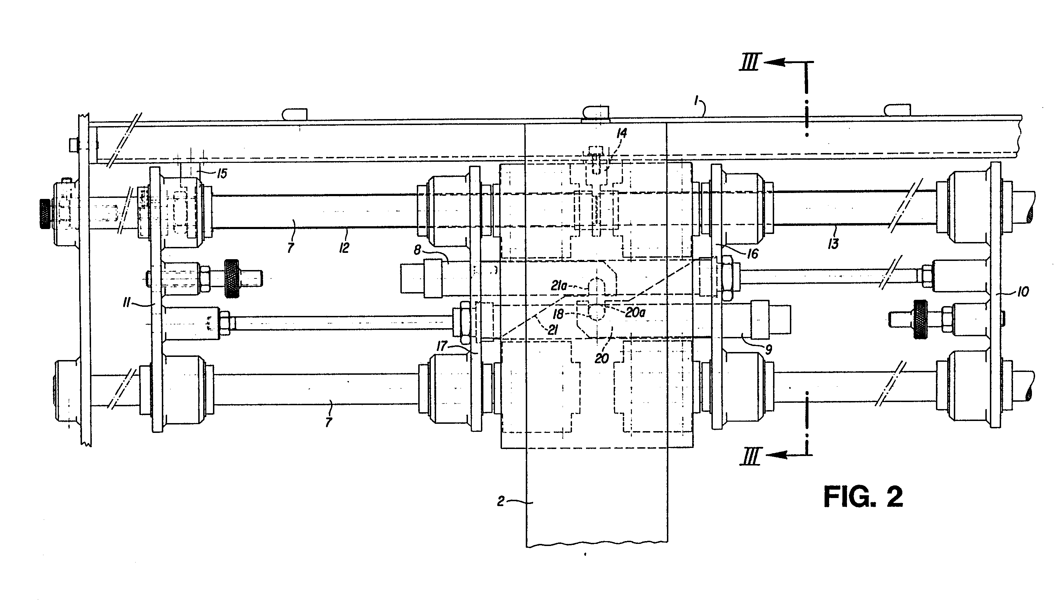

On retrouve, illustré par la fig. 2, le chariot d'alimentation 2 en position centrale, c'est-à-dire au dessus du poste de chargement du mécanisme d'emballage. Ce bras est monté coulissant le long des deux barres parallèles 7, entre deux coulisseaux d'entraînement 16 et 17, également montées sur les barres 7 et est susceptible d'occuper deux positions de part et d'autre de sa position centrale. A cet effet, chaque coulisseau d'entraînement 16 et 17 est associé à un vérin 8 respectivement 9 dont la tige de l'un 8 est fixée à un coulisseau intermédiaire 10 monté sur les barres 7, tandis que la tige de l'autre 9 est fixée à un coulisseau intermédiaire 11 également monté sur les barres 7. Deux vérins 12 et 13 coaxiaux sont fixés en symétrie miroir entre un support central 14 solidaire du bâti 1 et deux supports 15, également solidaires du bâti et dont l'un seulement est illustré. La tige du vérin 12 est fixée au coulisseau intermédiaire 11 tandis que celle du vérin 13 est fixée au coulisseau intermédiaire 10.

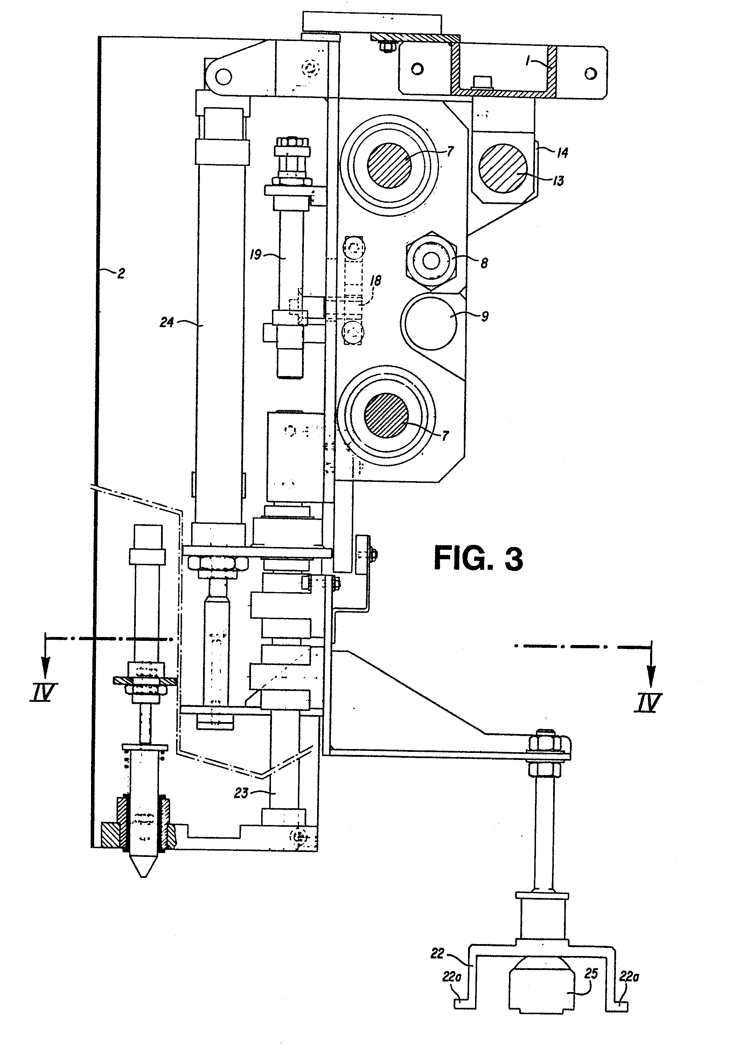

Le chariot d'alimentation 2 comporte un mécanisme d'embrayage comprenant un doigt d'embrayage 18 faisant saillie latéralement d'un vérin 19 (fig. 3) solidaire du chariot d'alimentation 2 destiné à venir en prise avec deux organes d'accouplement 20, 21 (fig. 2) munis de dégagements 20a, 21a pour recevoir le doigt d'embrayage 18 et solidaires respectivement des coulisseaux d'entraînement 16 et 17.

Les coulisseaux intermédiaires 10 et 11 étant fixés aux tiges des vérins 12 et 13 solidaires du bâti 1, lorsque le doigt d'embrayage 18 est en prise avec l'organe d'accouplement 20, par exemple, au moment où la tige du vérin 8 rentre, le coulisseau d'entraînement 16 qui est solidaire du vérin 8 se déplace vers le coulisseau intermédiaire 10 et entraîne avec lui le chariot d'alimentation 2 dans une première position. Si maintenant la tige du vérin 13, solidaire du coulisseau intermédiaire 10, sort de ce vérin, elle entraîne les coulisseaux 10 et 16 et le chariot 2 vers la droite de la fig. 2 dans une deuxième position. Les deux positions vers la gauche de la position centrale du chariot 2 sont symétriques et commandées de la même manière par les vérins 9 et 12 en déplaçant le doigt d'embrayage 18 dans le dégagement 21a de l'organe d'accouplement 21, après que le chariot d'alimentation 2 soit ramené dans la position centrale illustrée par la fig. 2.

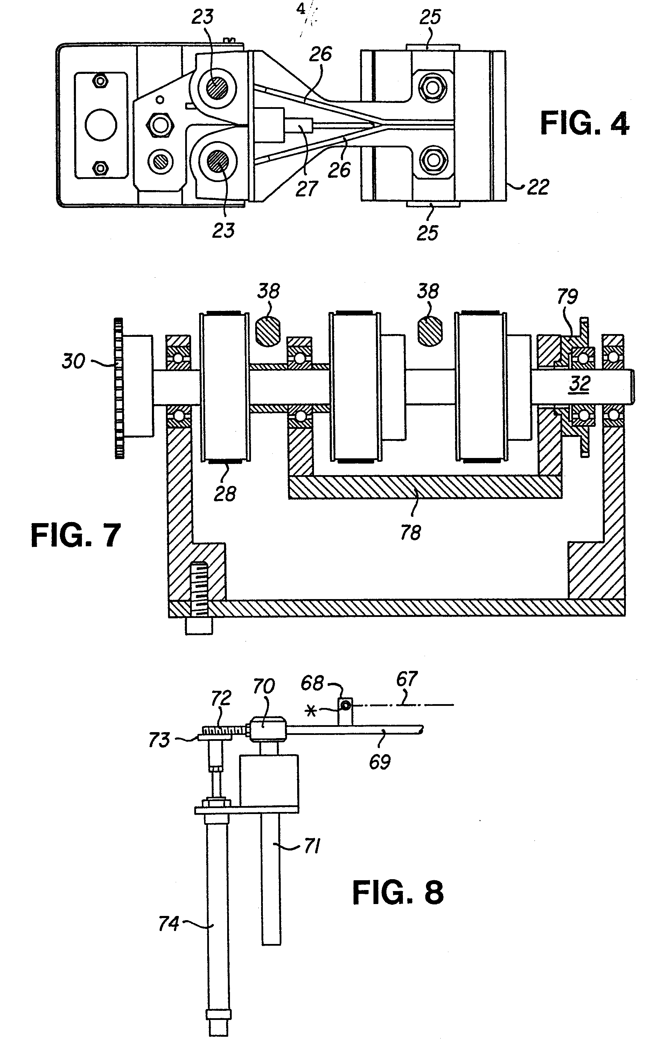

Ce chariot d'alimentation 2 porte une pince 22 de préhension des électrodes (figs 3 et 4). Cette pince 22 est montée coulissante sur deux tiges de guidage 23 et est fixée à l'extrémité de la tige d'un vérin 24 monté verticalement sur le chariot. Elle comporte deux mâchoires mobiles 25 (fig. 4) fixées chacune à l'extrémité d'un bras élastique 26 et deux surfaces de butée 22a. Ces deux bras 26 peuvent être écartés l'un de l'autre par la tige d'un vérin 27 de manière à écarter élastiquement les mâchoires 25 l'une de l'autre.

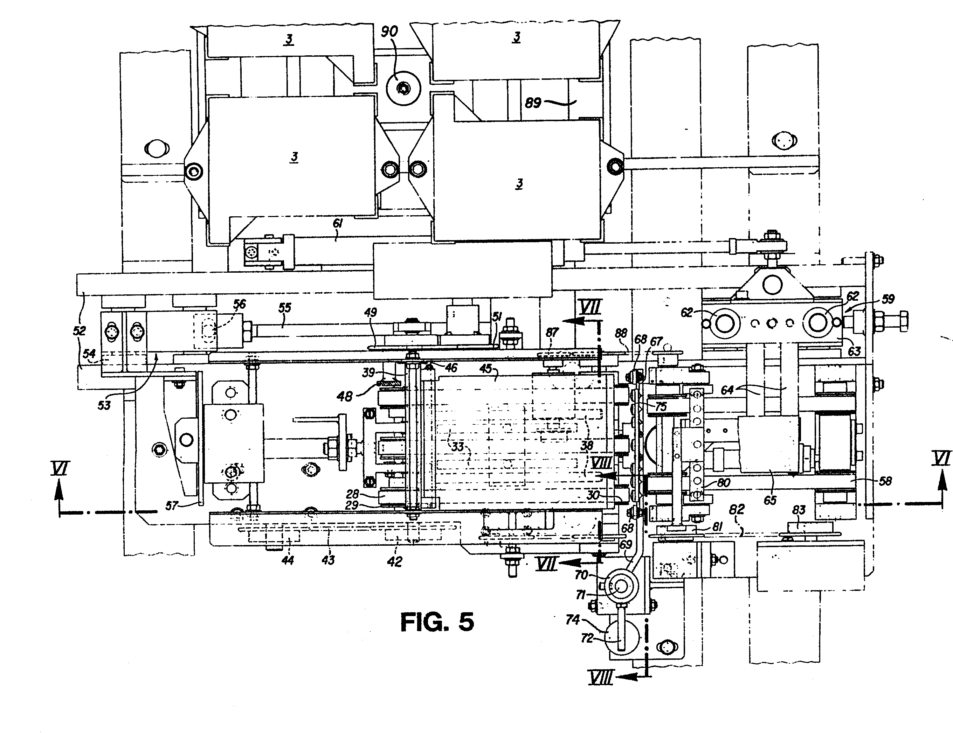

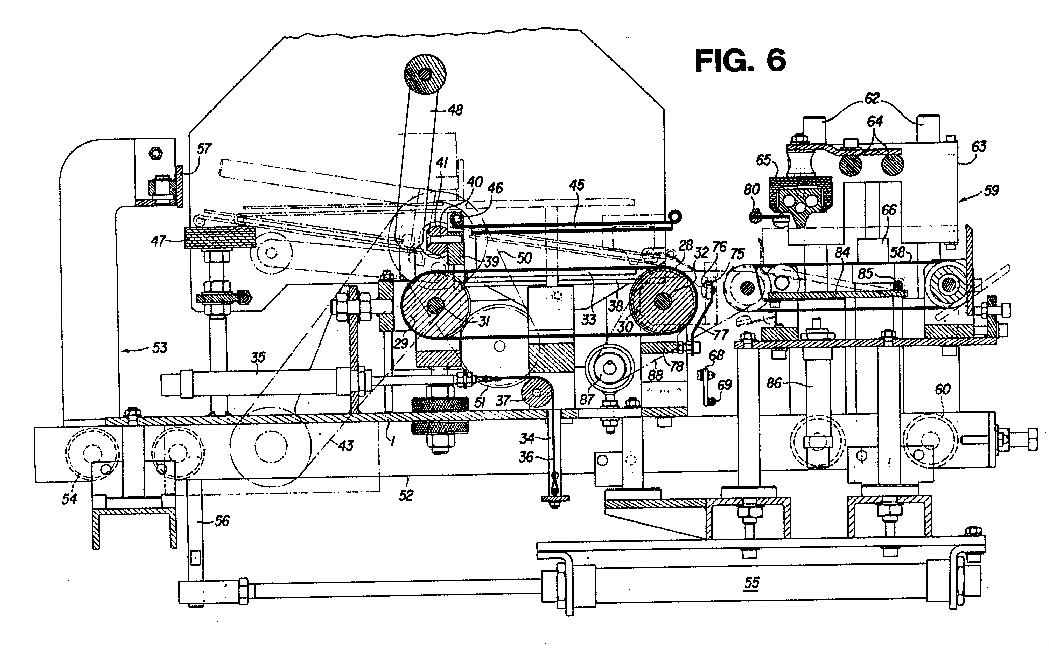

Le mécanisme d'alimentation du poste d'emballage en électrodes ayant maintenant été décrit en détail, nous allons alors décrire le mécanisme d'emballage destiné à former un paquet d'électrodes en nous référant plus particulièrement aux figs 5 et 6. Ce mécanisme comporte un poste de chargement des électrodes 3 situé exactement au-dessous de la pince 22 du chariot d'alimentation 2 lorsque ce chariot occupe la position centrale illustrée par la fig. 2. Ce poste de chargement présente un transporteur à courroies sans fin 28, celles-ci étant montées sur des galets 29 et 30 solidaires de deux axes parallèles 31 respectivement 32.

Ce poste de chargement comporte encore un élévateur 33 monté coulissant verticalement par l'intermédiaire d'une tige 34. Un vérin 35, solidaire du bâti 1, s'étend horizontalement et est relié à la tige 34 de l'élévateur 33 par l'intermédiaire d'un brin de courroie 36 passant sur une poulie folle 37 tangeante à l'axe de la tige 34. Ce vérin 35 est susceptible de disposer l'élévateur 33 dans deux positions limites dont la seconde est illustrée en traits mixtes par la fig. 6. Deux bras basculeurs 38 sont solidaires, par une de leurs extrémités, d'un support 39 fixé par une vis 40 à l'arbre 41 d'un pignon 42 relié par une chaîne 43 à un pignon d'entraînement 44. Ces bras basculeurs 38, dans la position initiale dans laquelle ils sont dessinés en traits pleins sur la fig. 6, sont adjacents aux brins supérieurs des courroies 28 du transporteur. Le support 39 de ces bras basculeurs 38 porte encore un volet 45 articulé librement autour d'un axe 46 parallèle à l'arbre 41 et solidaire de cet arbre 41. Ce volet 45 est susceptible d'occuper différentes positions dont l'une est illustrée en trait continu et les autres en traits mixtes (fig. 6). Deux des positions illustrées en traits mixtes sont délimitées par un taquet 47. Ce volet 45 est associé à un bras d'entraînement 48 solidaire d'un pignon 49 (fig. 5) relié par une chaîne 50 (fig. 6) à un pignon d'entraînement 51. Ce bras d'entraînement 48 est mobile entre deux positions limites illustrées en trait continu respectivement en traits mixtes.

Deux rails de guidage 52 sont montés latéralement le long du mécanisme d'emballage. Ces rails 52 guident un chariot poussoir 53 monté sur des galets 54. Ce chariot poussoir 53 est relié à une tige d'un vérin d'actionnement 55 par une tige de liaison 56. Ce chariot 53 porte un poussoir 57 situé au niveau de la face supérieure du volet 45 lorsque celui-ci repose sur le taquet 47 et est horizontal comme illustré en traits mixtes.

Un second transporteur à courroies sans fin 58 fait suite au premier transporteur 28, son brin supérieur étant au même niveau que celui de ce transporteur 28. Un chariot de soudage 59 est monté le long des rails 52 par l'intermédiaire de galets 60. Ce chariot de soudage 59 est fixé à la tige d'un vérin d'actionnement 61 (fig. 5) et comporte deux colonnes 62 sur lesquelles un bloc support 63 est monté coulissant. Deux bras horizontaux 64 partent de ce bloc 63 et portent une tête de soudage 65 constituée essentiellement par une résistance chauffante. Le bloc support 63 est commandé par la tige d'un vérin 66 (fig. 6) disposé verticalement et fixé à la base du chariot 59.

Un fil chauffant 67 (figs 5 et 8) est tendu entre deux languettes de fixation 68 soudées à une tige 69 dont une extrémité est fixée à une bague 70 vissée sur un coulisseau vertical 71. Une seconde tige 72 est fixée à la bague 70 et repose sur un plateau 73 solidaire de l'extrémité d'un vérin 74 disposé verticalement, qui permet de faire monter le fil chauffant 67 entre les brins supérieurs des transporteurs 28 et 58 pour couper par fusion le ruban de non-tissé 4 (illustré seulement par la fig. 1) en matériau thermoplastique.

Un organe de rabattement 75 du ruban de non-tissé 4 coupé par le fil chauffant 67 est monté coaxialement à l'axe 32 des galets 30 (fig. 6). Cet organe de rabattement 75 comporte une série de plots 76, solidaires d'un bras élastique 77, fixé à un étrier 78 fixé à un pignon d'entraînement 79 monté librement sur l'axe 32 (fig. 7). Cet organe de rabattement 75 est susceptible d'être amené de la position illustrée en trait continu par la fig. 6 à la position illustrée en traits mixtes sur cette même figure.

Un autre organe de rabattement 80 de l'autre extrémité de ruban de non-tissé 4 est monté solidaire d'un pignon 81 (fig. 5) relié par une chaîne 82 à un pignon d'entraînement 83, et est susceptible d'occuper soit la position illustrée en trait continu par la fig. 6, soit celle illustrée en traits mixtes. Cet organe de rabattement 80 est encore associé à un levier de rabattement 84 (fig. 6) articulé autour d'un axe 85 et actionné par un vérin 86.

Les deux transporteurs à courroies sans fin 28 et 58 sont entraînés à partir d'un pignon d'entraînement commun 87 et d'une chaîne sans fin 88. Un poste d'alimentation en électrodes 3 est disposé latéralement de chaque côté du transporteur à courroies sans fin 28 constituant le poste de chargement des électrodes. Ces postes d'alimentation dont seul l'un est illustré par la fig. 5, comportent un plateau d'alimentation 89 monté rotativement sur un arbre d'entraînement vertical 90 et sur lequel sont positionnés quatre piles d'électrodes 3 d'une même polarité. Deux de ces piles sont alignées transversalement au transporteur 28 avec leurs pattes de connexion apparaissant sur un même bord longitudinal mais adjacentes respectivement aux deux bords latéraux opposés des électrodes 3. Ces électrodes 3 sont en outre centrées sur l'axe de déplacement de la pince 22 montée sur le chariot d'alimentation 2 des figs 2, 3 et 4. Les deux autres piles d'électrodes 3 disposées sur le plateau d'alimentation 89 ont une orientation semblable à celle des deux piles d'électrodes alignées sur l'axe transversal du transporteur 28, mais tournées chacune de 180° par rapport à la pile qui lui est diamétralement opposée sur le plateau d'alimentation 89, de manière qu'en tournant ce plateau de 180° les deux autres piles d'électrodes 3 occupent respectivement la place de la pile d'électrodes qui lui est diamétralement opposée. Les électrodes de l'autre plateau d'alimentation qui n'est pas représenté sont toutes de l'autre polarité. Les positions des électrodes 3 sur cet autre plateau d'alimentation correspondent aux positions des électrodes 3 du plateau d'alimentation illustré suite à une translation de ce plateau d'alimentation le long d'un axe parallèle à l'axe de déplacement du chariot d'alimentation 2.

Pour former un paquet d'électrodes 3 à l'aide du dispositif que l'on vient de décrire, le chariot d'alimentation 2 est amené par l'un des vérins 8 et 9, suivant la position du doigt d'embrayage 18 (fig. 2), vis-à-vis de l'une des piles d'électrodes positives ou négatives disposée sur l'un des plateaux d'alimentation 89 à proximité du transporteur 28, les vérins 12 et 13 restant alors immobiles. La pince 22 est abaissée avec ses mâchoires mobiles 25 écartées par le vérin 27 (figs 3 et 4). Lorsque les surfaces de butée 22a de cette pince 22 touchent le haut de la pile, elle s'arrête et les parties des mâchoires mobiles 25 qui s'étendent au-dessous du plan de ces surfaces de butée 22a (fig. 3), sur une hauteur correspondant à l'épaisseur d'une électrode 3, permettent de saisir cette électrode lorsque le vérin 27 libère les bras élastiques 26 des mâchoires mobiles 25. La pince 22 est alors soulevée par le vérin 24 et le charoit 2 est ramené en position centrale au-dessus du transporteur à courroies 28 par l'extension des vérins 8 et 9, ceux-ci étant toujours commandés simultanément, le choix de celui avec lequel le chariot 2 travaille étant réalisé par le vérin 19 et son doigt d'embrayage 18 et déterminant donc la polarité de l'électrode 3 à prendre, puisque chaque plateau d'alimentation 89 ne porte que des piles d'électrodes d'une même polarité.

Au poste de chargement, le volet 45 se trouve dans la position horizontale en appui contre le taquet 47, dessinée en traits mixtes. Les bras basculeurs 38 sont dans la position dessinée en trait continu (fig. 6), l'élévateur 33 est abaissé et le bras d'entraînement 48 du volet 45 est dans la position dessinée en traits mixtes. Le ruban de non-tissé 4, fourni par le rouleau d'alimentation 5 disposé à gauche des figs 5 et 6 mais non représenté sur ces figures, passe sous le poussoir 57 sur le volet 45 dans la position qui vient d'être précisée et ce ruban est tendu entre un paquet d'électrodes emballées, disposé sur le transporteur 58 et dessiné en traits mixtes et l'extrémité du volet 45 articulé autour de l'axe 46.

Lorsque la pince 22 (fig. 3) s'abaisse pour déposer l'électrode 3, première électrode d'un nouveau paquet, la pression exercée par l'électrode tire le ruban de non-tissé 4 en lui faisant suivre la partie verticale du support 39 pour l'appliquer contre le transporteur à courroies 28. La pince 22 remonte, et le vérin 74 fait monter la tige 69 et le fil chauffant 67. La tige 69 écarte les plots 76 solidaires du bras élastique 77 (fig. 6) et le fil chaud coupe le ruban de non-tissé 4 entre les transporteurs 28 et 58. Une fois le fil chauffant 67 revenu à sa position initiale, ce sont les organes de rabattement 75 et 80 et le levier de rabattement 84 qui replient les extrémités coupées du ruban de non-tissé 4 respectivement contre la première électrode du nouveau paquet et contre le paquet terminé qui se trouve sur le transporteur 58, dans les positions de l'organe de rabattement 75 et du levier de rabattement 84 illustrées en traits mixtes par la fig. 6 et dans la position de l'organe de rabattement 80 illustrée en trait continu par cette même figure.

Ensuite, la tête de soudage 65 soude l'extrémité rabattue du ruban de non-tissé 4 en matériau thermoplastique contre le paquet d'électrodes porté par le transporteur 58, dans la position illustrée en trait continu par la fig. 6, après quoi le chariot de soudage 59 est déplacé par le vérin 61 le long des rails de guidage 52, au-dessus de l'autre extrémité du ruban de non-tissé coupé, rabattue contre la première électrode posée sur le transporteur 28. Le vérin 66 abaisse alors la tête de soudage 65 pour fixer l'extrémité de ce ruban contre l'électrode.

Une fois la tête de soudage ramenée dans sa position illustrée en trait continu par la fig. 6, le bras d'entraînement 48 du volet 45 passe de sa position illustrée en traits mixtes à sa position illustrée en trait continu par la fig. 6. Lorsque le volet 45 arrive dans la position de fin de course du bras d'entraînement 48, il tombe par l'effet de son propre poids contre la première électrode posée sur le transporteur 28. Durant cette course, le volet entraîne avec lui le ruban non-tissé en déroulant une longueur correspondante du rouleau d'alimentation 5 qui n'est illustré que par la fig. 1. L'électrode posée sur le transporteur 28 se trouve alors complètement enveloppée par le ruban de non-tissé 4 qui n'a pas été repré-

senté sur cette fig. 6 dans un but de clarté. Le support 39 des bras basculeurs 38 tourne ensuite en sens contraire de celui des aiguilles d'une montre, jusque dans la position illustrée en traits mixtes par la fig. 6. Comme le volet 45 est pivoté autour de l'axe 46 solidaire du même support 39, il se trouve alors dans la position d'appui contre le taquet 47 mais incliné comme illustré en traits mixtes.

Le support 39 ramène alors les bras basculeurs 38 dans leur position initiale de sorte que le volet 45 est amené, par son axe 46 solidaire de ce support 39, dans sa position horizontale dessinée en traits mixtes sur la fig. 6. Bien entendu, l'électrode, enveloppée du ruban de non-tissé, est restée sur ce volet 45. L'élévateur 33 est alors déplacé par le vérin 35 dans la position illustrée en traits mixtes par la fig. 6, c'est-à-dire exactement au niveau de la face supérieure du volet 45. Le vérin 55 tire le chariot poussoir 53 le long des rails de guidage 52 de sorte que le poussoir 57 fait passer l'électrode enveloppée du volet 45 sur l'élévateur 33, en tirant une longueur de ruban de non-tissé correspondante et le poussoir 57 et son chariot reviennent seuls dans la position illustrée en trait continu par la fig. 6. L'élévateur 33 est ramené dans sa position initiale et dépose le paquet d'électrodes en formation sur les courroies du transporteur 28.

Le chariot 2 porteur de la pince 22 (figs 2 à 4) est alors amené vis-à-vis de l'une des piles d'électrodes portées par l'autre plateau d'alimentation 89 sur lequel sont stockées les électrodes de l'autre polarité. Comme la première électrode du paquet a subi une rotation de 180° autour d'un axe parallèle à ses bords latéraux, sa patte de connexion se trouve maintenant dans une position inversée par rapport à sa position initiale. Etant donné que maintenant on veut ajouter une seconde électrode, on la choisit évidemment de l'autre polarité et avec sa patte de connexion adjacente au bord latéral de cette électrode, opposé par rapport au bord latéral de la première électrode adjacent à la patte de connexion de cette première électrode, de façon que les pattes de connexion des électrodes des deux polarités se trouvent adjacentes aux deux bords latéraux respectifs du paquet d'électrodes. Comme le plateau d'alimentation 89 présente deux piles d'électrodes dont les pattes de connexion sont adjacentes à des bords latéraux opposés des électrodes, il suffit alors d'amener la pince 22 au-dessus de la pile d'électrodes dont les pattes de connexion se trouvent dans l'orientation désirée.

La même suite d'opérations que celle qui vient d'être décrite est répétée, l'électrode choisie est posée sur la première électrode avec l'interposition du ruban de non-tissé enveloppant cette première électrode. Une fois que le processus d'emballage de cette seconde électrode est terminé, cette seconde électrode est elle-même tournée de 180° autour d'un axe parallèle à ses bords latéraux et elle se trouve alors au-dessous de la première électrode. Pour obtenir une alternance d'électrodes de polarités opposées dans le paquet, il faut donc ajouter une troisième électrode de même polarité que la deuxième, mais comme entre-temps celle-ci a tourné de 180°, il faut choisir cette troisième électrode sur la pile d'électrodes dont les pattes de connexion sont opposées aux pattes de connexion de la pile d'électrodes ayant fourni la deuxième électrode. C'est la raison pour laquelle chaque plateau d'alimentation 89 présente deux piles d'électrodes d'une même polarité alignées dans la trajectoire de la pince 22, mais avec les pattes de connexion adjacentes respectivement aux deux bords latéraux opposés. Les deux autres piles disposées sur chaque plateau 89 diamétralement symétriques aux piles situées le long de la trajectoire de la pince 22 et passant par le poste de chargement constitué par le transporteur 28, servent de réserve. Une fois que les deux piles d'électrodes, situées sur la trajectoire de cette pince 22, sont épuisées, le plateau 89 est entraîné autour de son axe 90 de 180° par un moteur (non représenté) et d'autres piles peuvent remplacer les piles épuisées, de sorte que le dispositif d'emballage peut travailler sans s'arrêter.

Bien entendu, lorsque trois électrodes sont emballées, une première d'une polarité et les deux suivantes de l'autre polarité de part et d'autre de la première, on ajoute ensuite, pour continuer, le paquet, successivement deux électrodes de la même polarité que la première, toujours selon la suite d'opérations décrites. Ces quatrième et cinquième électrodes sont prises par la pince 22 successivement sur les deux piles de l'autre plateau d'alimentation 89 qui sont alignées sur l'axe de la pince 22. Un seul plateau 89 a été illustré par la fig. 5 dans un but de simplification du dessin. Le nombre d'électrodes 3 constituant le paquet peut être choisi quelconque. Une fois que le nombre d'électrodes désiré a été emballé, toujours en observant l'alternance de deux électrodes d'une même polarité ajoutées de chaque côté du paquet suivie de deux électrodes de l'autre polarité, les transporteurs 28 et 58 sont entraînés par le pignon d'entraînement 87 et la chaîne 88. Le paquet d'électrodes est ainsi amené sur le transporteur 58. Le processus initial de formation d'un nouveau paquet d'électrodes et de terminaison du paquet d'électrodes emballées a déjà été décrit. Le cycle est terminé et il peut donc être répété pour former un nouveau paquet.

La formation entièrement automatique d'un paquet à l'intérieur duquel toutes les électrodes sont séparées les unes des autres constitue une simplification et une rationalisation considérable de la fabrication des batteries. Le dispositif décrit est notamment adapté pour constituer l'un des éléments d'une chaîne de fabrication. La conception de ce dispositif avec des commandes par vérins et pignons avec chaînes exclusivement le rend extrêmement fiable.

REVENDICATIONS

1. Dispositif pour former des paquets d'électrodes pour générateurs électrochimiques, par enroulement d'un ruban d'un matériau non-tissé autour des bords latéraux des électrodes en partant d'une électrode située au centre de ce paquet et en allant vers ses électrodes externes, caractérisé par le fait qu'il comporte un rouleau d'alimentation dudit ruban, un poste de chargement d'électrodes en position sensiblement horizontale disposé le long du chemin de déroulement de ce ruban, des moyens d'alimentation de ce poste en électrodes, un organe basculant monté autour d'un axe transversal audit chemin de déroulement, et situé en position initiale au poste de chargement sous le passage du ruban, un volet également articulé autour d'un axe transversal à ce chemin et adjacent à celui dudit organe basculant, ce volet s'étendant dans sa position initiale du poste de chargement, en direction du rouleau d'alimentation du ruban sous le passage de ce ruban, des moyens d'entraînement pour faire basculer ledit volet vers ledit poste de chargement, ce volet entraînant une portion de ruban équivalent à sa longueur vers cet organe, des moyens d'entraînement pour faire basculer cet organe basculant et pour ramener le volet dans sa position initiale et un poussoir pour faire ensuite glisser le paquet en formation dudit volet en position initiale vers le poste de chargement.

2. Dispositif selon la revendication 1, caractérisé par le fait qu'un organe de support mobile verticalement est disposé au poste de chargement et par des moyens d'entraînement de cet organe de support entre deux niveaux supérieur et inférieur, le niveau supérieur coïncidant sensiblement à celui du volet dans sa position initiale.

3. Dispositif selon la revendication 1, caractérisé par le fait qu'un premier transporteur à courroies est situé audit poste de chargement et qu'un second transporteur à courroies fait suite au premier du côté de celui-ci le plus éloigné du rouleau d'alimentation et par le fait qu'un organe de coupe est disposé entre ces deux transporteurs pour couper le ruban lorsque le paquet terminé est évacué vers le second transporteur.

4. Dispositif selon la revendication 3, caractérisé par des moyens pour rabattre l'extrémité arrière, respectivement l'extréminé avant du ruban coupé contre le paquet d'électrodes, respectivement contre la première électrode d'un nouveau paquet et par un organe de soudage de ces extrémités rabattues.

5. Dispositif selon la revendication 1, caractérisé par le fait que les moyens d'alimentation de ce poste en électrodes comporte un organe de préhension monté sur une coulisse verticale et associé à des moyens d'actionnement pour le déplacer le long de cette coulisse verticale elle-même montée sur une coulisse horizontale et associée à des moyens d'actionnement pour la déplacer le long de cette coulisse horizontale.

.6. Dispositif selon la revendication 5, caractérisé par le fait que les moyens d'actionnement du coulissement horizontal de ladite coulisse vertical déterminent deux positions latérales de chaque côté du poste de chargement, chacune de ces positions correspondant à une pile d'électrodes, les électrodes de chaque polarité étant réparties sur deux de ces piles mais orientées avec leurs pattes de connexion respectives tournées de 180° l'une par rapport à l'autre autour d'un axe parallèle à l'axe longitudinal de ladite coulisse horizontale et à leurs bords latéraux.

7. Dispositif selon la revendication 5, caractérisé par le fait que les moyens pour déplacer la coulisse verticale le long de la coulisse horizontale comportent une première paire de vérins montés en série d'un côté du poste de chargement pour déplacer la coulisse verticale latéralement dans deux positions déterminées et une seconde paire de vérins montés en série de l'autre côté du poste de chargement pour déplacer la coulisse verticale latéralement dans deux autres positions déterminées.

**FIG. 1**

FIG. 2

FIG. 3

0096626

**FIG. 4**

**FIG. 7**

**FIG. 8**

FIG. 5

0096626

**FIG. 6**

**0096626**

Office européen
des brevets

**RAPPORT DE RECHERCHE EUROPEENNE**

Numéro de la demande

EP   83  40  1078

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | US-A-3 425 871  (BERGER) <br> * Revendications 1-5; figure 3 * | 1 | H 01 M   10/14 <br> H 01 M   10/28 <br> H 01 M   10/04 |
| | --- | | |
| A | FR-A-1 203 505  (YARDNEY INTERNATIONAL CORP.) <br> * Figure 10; résumé A * | 1 | |
| | --- | | |
| A | GB-A-2 003 650  (VARTA BATTERIE AG) <br> * Revendications 1,4 * | 1 | |
| | ----- | | |

**DOMAINES TECHNIQUES RECHERCHES (Int. Cl. 3)**

H 01 M

Le présent rapport de recherche a été établi pour toutes les revendications

| Lieu de la recherche <br> LA HAYE | Date d'achèvement de la recherche <br> 04-08-1983 | Examinateur <br> STANGE R.L.H |
|---|---|---|